# EUROPEAN PATENT APPLICATION

(11) **EP 2 624 038 A1**
(43) Date of publication of application: **07.08.2013**
(21) Application number: 11828291.2
(22) Date of filing: 25.07.2011
(51) Int. Cl.: G02B 7/04, H04N 5/225

(54) **DRIVE DEVICE**

(30) Priority: 27.09.2010 JP 2010215445
(71) Applicant: Konica Minolta Advanced Layers, Inc., Hachioji-shi Tokyo 192-8505 (JP)
(72) Inventor: HONDA, Yasuhiro, Hino-shi, Tokyo 191-8511 (JP)
(74) Representative: HOFFMANN EITLE
(86) International application number: PCT/JP2011/004169
(87) International publication number: WO 2012/042722

(57) **Abstract**

A drive device (30) of the invention supplies, to a shape memory alloy member (15), an electric pulse having a pulse cycle shorter than a predetermined cycle for reading out an image from an imaging element. The drive device (30) having the above configuration is advantageous in preventing or suppressing noise which may affect peripheral circuits resulting from a frequency component or a drive current.

## Description

### TECHNICAL FIELD

The present invention relates to a relatively small drive device suitably loaded in e.g. a camera-mounted mobile phone for use in adjusting e.g. the focus or zoom of a lens unit constituting an imaging optical system.

### BACKGROUND ART

In recent years, development of an imaging device having enhanced image quality has progressed, accompanied by a remarkable increase in the pixel number of an imaging element to be loaded in e.g. a camera-mounted mobile phone. As the development has progressed, there is an increasing demand for a high-performance lens unit constituting an imaging optical system. Specifically, a fixed focus type imaging device has developed into a high-performance auto-focus imaging device. Further, regarding a zoom function, an optical zoom function has been required in place of a digital zoom function or in addition to a digital zoom function. It should be noted that it is necessary to provide an actuator for moving a lens in an optical axis direction in any of the imaging device having an auto focus function and the imaging device having an optical zoom function.

As such an actuator, there has been known an actuator using a shape memory alloy (hereinafter, also called as "SMA"). An SMA actuator is a device configured in such a manner that an expanding/contracting force is generated in an SMA member by e.g. energizing and heating the SMA member, and the expanding/contracting force is used as a lens driving force. The actuator is generally advantageous in reducing the size and the weight of the device, and is advantageous in obtaining a relatively large mechanical force.

Regarding an SMA actuator, there has been proposed a technology, in which a terminal voltage of an SMA member is detected in controlling supply of electric power to the SMA member by a drive device, and electric power in accordance with an electrical resistance value based on the detected terminal voltage is supplied to the SMA member (see patent literature 1). The technology is advantageous in eliminating the need of an element such as a position sensor, facilitating integration of the circuits, and reducing the electric power loss.

In the case where an SMA actuator is used in a device requiring multiple functions and miniaturization such as a camera-mounted mobile phone, there may arise a case that an imaging element and a driver of the actuator should be disposed in proximity to each other. In such a case, specifically, in the case where a frequency component of a drive current flowing through the driver of the actuator is close to the frequency used in the imaging element, it is necessary to provide countermeasures against noise.

### CITATION LIST

### PATENT LITERATURE

Patent literature 1: JAP 2009-13891A

### SUMMARY OF INVENTION

In view of the above, an object of the invention is to provide a drive device for a shape memory alloy member that enables to supply a drive current capable of suppressing noise to peripheral circuits.

A drive device of the invention supplies, to a shape memory alloy member, an electric pulse having a pulse cycle shorter than a predetermined cycle for reading out an image from an imaging element. The drive device having the above configuration is advantageous in preventing or suppressing noise which may affect peripheral circuits resulting from a frequency component of a drive current.

These and other objects, features and advantages of the present invention will become more apparent upon reading the following detailed description along with the accompanying drawings.

### BRIEF DESCRIPTION OF DRAWINGS

FIG. 1 is a perspective view showing a schematic configuration of a camera unit to be built in a mobile phone;
FIG. 2 is a perspective view showing a schematic configuration of a sensor substrate shown in FIG. 1;
FIG. 3 is a front view (diagram when viewed from a lens aperture plane) showing a configuration of a driving mechanism for an auto-focus lens built in a lens unit shown in FIG. 1;
FIGS. 4A and 4B are side views for describing an operation to be performed by the driving mechanism for the auto-focus lens shown in FIG. 3;
FIG. 5 is a characteristic diagram showing a relationship between a temperature and a resistance value of an SMA member;
FIG. 6 is a characteristic diagram showing a relationship between a temperature and a resistance value of an SMA member from infinity to a macro end;
FIG. 7 is a characteristic diagram showing a relationship between lens displacement and a resistance value of an SMA member;
FIG. 8 is a block diagram showing an electrical configuration of a drive device for a shape memory alloy actuator in a first embodiment;
FIG. 9 is a diagram showing a circuit example of an envelope signal generator in the drive device shown in FIG. 8;
FIGS. 10A and 10B are diagrams showing an example of an envelope signal to be outputted from the envelope signal generator, and FIG. 10C is a diagram for describing a case, in which a terminal voltage of an SMA member is detected in controlling supply of electric power to the SMA member; and
FIG. 11 is a block diagram showing an electrical configuration of a drive device for a shape memory alloy actuator in a second embodiment.

### DESCRIPTION OF EMBODIMENTS

Hereinafter, an embodiment of the invention is described referring to the drawings. Constructions identified by the same reference numerals in the drawings are the same constructions and not repeatedly described unless necessary. Further, in the specification, in the case where the elements are generically referred to, the elements are indicated with reference numerals without suffixes, and in the case where the elements are individually referred to, the elements are indicated with reference numerals with suffixes.

### (First Embodiment)

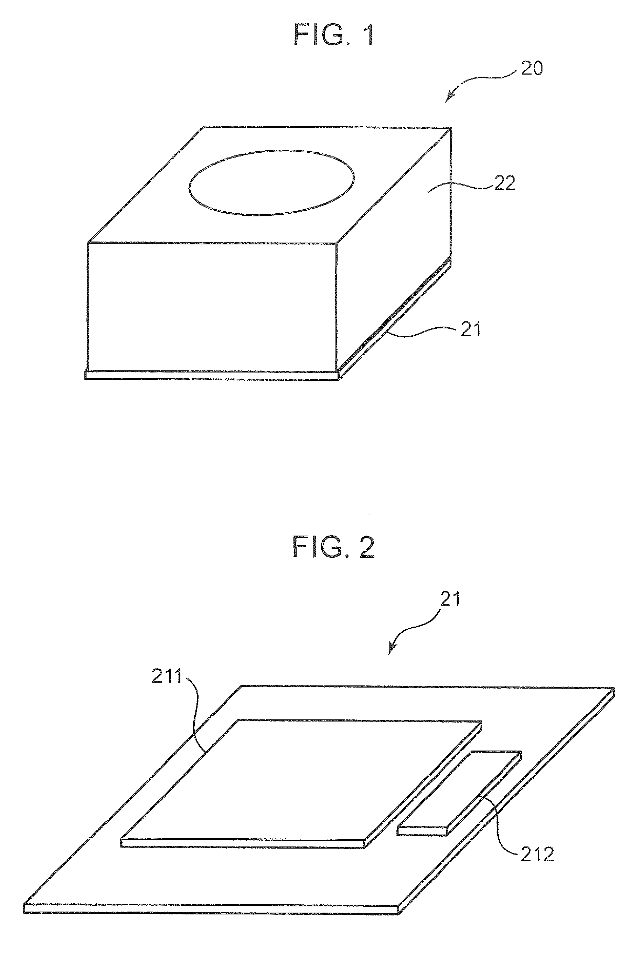

FIG. 1 is a perspective view showing a schematic configuration of a camera unit 20 to be built in a mobile phone. Referring to FIG. 1, the camera unit 20 is provided with a lens unit 22 built in with an auto-focus drive device, and a sensor substrate 21.

FIG. 2 is a perspective view showing a schematic configuration of the sensor substrate 21. Referring to FIG. 2, there are mounted, on the sensor substrate 21, an image sensor IC (imaging element) 211 such as a CCD (Charge Coupled Devices) image sensor or a CMOS (Complementary Metal Oxide Semiconductor) image sensor, and a driver IC 212 for driving the auto-focus drive device built in the lens unit 22.

Light rays from a subject are received and formed into an optical image of the subject on a light receiving surface of the image sensor IC 211 by the lens unit 22. The optical image of the subject is subjected to photoelectric conversion by the image sensor IC 211, and the photoelectrically converted signal is outputted from the image sensor IC 211 as an image signal.

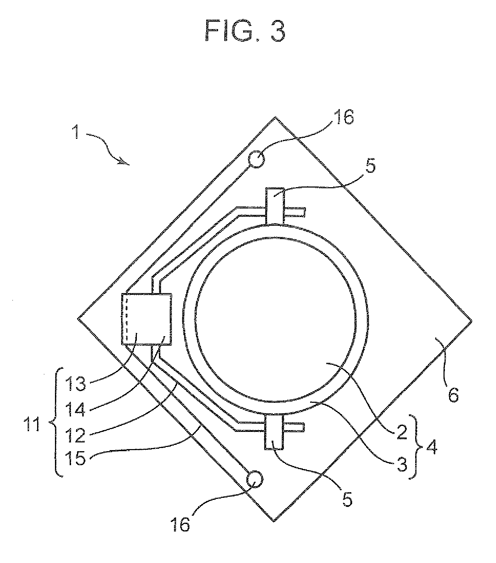

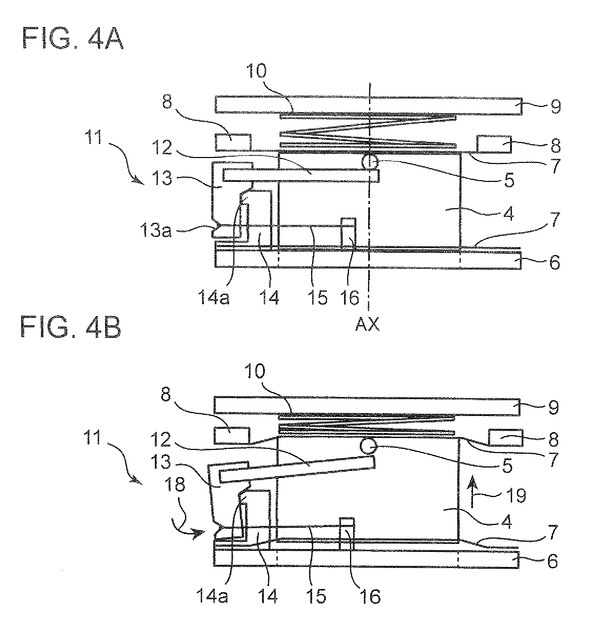

FIG. 3 is a front view (diagram when viewed from a lens aperture plane) showing a configuration of a driving mechanism 1 of an auto-focus lens built in the lens unit 22. FIGS. 4A and 4B are side views for describing an operation to be performed by the driving mechanism 1. FIG. 4A shows a case corresponding to an infinite distance end, and FIG. 4B shows a case corresponding to a closest distance end.

Referring to FIG. 3, and FIGS. 4A and 4B, the driving mechanism 1 is provided with a shape memory alloy actuator 11, and a lens barrel 4. The driving mechanism 1 moves a lens 2 disposed in the lens barrel 4 for focusing by displacing (moving) the lens barrel 4 in an axial direction AX (forward and backward directions).

The lens barrel 4 is provided with the lens 2, and a cylindrical-shaped lens driving frame 3. The lens 2 is mounted on the lens driving frame 3. Further, a pair of projections 5 are radially outwardly formed on an outer circumferential surface of the lens barrel 4 at a front end of the lens barrel 4 in the axial direction AX. The projections 5 are engaged with an arm portion 12 of the shape memory alloy actuator 11. Thus, the lens barrel 4 is displaceable (movable) along the axial direction AX (forward and backward directions) by the arm portion 12.

The lens barrel 4 is mounted on a base portion 6. Front and rear ends of the lens driving frame 3 in the axial direction AX are supported, by a pair of link members 7, on the base portion 6, and on an upper base 8 which is integrally formed with the base portion 6 via a lateral outer wall (not shown). In this way, the lens barrel 4 is movable in parallel to the axial direction AX (forward and backward directions).

A bias spring 10 is interposed between the lens driving frame 3 and a front cover 9 at a front end of the lens driving frame 3. The base portion 6 is formed with an aperture portion through which the lens 2 is allowed to form a subject image on the light receiving surface of the image sensor IC 211 shown in FIG. 2.

The shape memory alloy actuator 11 is provided with the arm portion 12 serving as a movable portion, a lever 13 and a support leg 14, and an SMA member 15 constituted of a shape memory alloy (SMA) wire.

The arm portion 12 is formed into a generally C-shape or a generally U-shape, when viewed from the front side (lens aperture side). The projections 5 are engaged with both ends of the arm portion 12, and a middle portion of the arm portion 12 is fixedly attached to an end of the lever 13. A middle portion of the lever 13 is pivotally supported at a pivot portion 14a of the support leg 14. The other end of the lever 13 is formed with a cutaway 13a at a position opposing to the pivot portion 14a of the support leg 14.

The SMA member 15 is wound around the cutaway 13a formed in the lever 13. By the winding, it is possible to prevent positional deviation of the SMA member 15 with respect to the displacement (movement) of the lens barrel 4 in the axial direction AX (forward and backward directions). Both ends of the SMA member 15 are wound around a pair of electrodes 16 standing upright on the base portion 6.

In the above configuration, during a period when electric power is not supplied between the electrodes 16, the SMA member 15 releases the heat and transforms to martensite phase (low temperature phase). Then, the SMA member 15 expands by a resilient force of the bias spring 10, and as shown in FIG. 4A, the lens barrel 4 is positioned to a home position (infinite distance end) in a state that the lens barrel 4 is pressed against the base portion 6. Since the lens barrel 4 is pressed against the base portion 6, the lens barrel 4 is resistive against an external force such as an impact.

On the other hand, in the case where electric power is supplied between the electrodes 16 by way of an electric pulse, and as the duty increases (amount of electric power increases), the SMA member 15 contracts while releasing Joule heat, whereby a tension force is generated in the SMA member 15. As a result, as shown in FIG. 4B, the lever 13 swings in the direction of the arrow 18.

When the lever 13 swings in the direction of the arrow 18, the lens barrel 4 is moved toward the direction of the arrow 19 i.e, toward the front cover 9 against a resilient force of the bias spring 10 via the arm portion 12 and the projections 5.

Then, the SMA member 15 turns to austenite phase (high temperature phase) in a predetermined state that the duty is high, and the lens barrel 4 reaches a sweeping end (closest distance end).

Further, a portion near the bending point of the lever 13 having an L-shape in side view (see FIGS. 4A and 4B) and the arm portion 12 is supported by the pivot portion 14a, and the distance to a portion of the arm portion 12 at which the projections 5 engage with the arm portion 12 is set longer than the distance to a portion of the lever 13 at which the SMA member 15 engages with the lever 13. This enables to move the lens barrel 4, while extending the displacement of the SMA member 15.

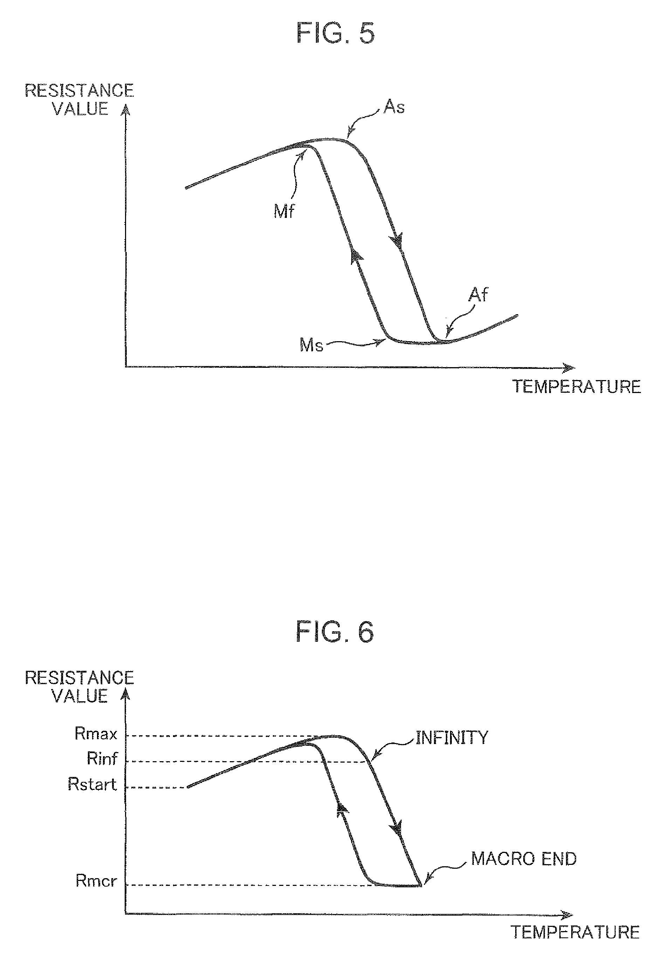

FIG. 5 is a characteristic diagram showing a relationship between a temperature and a resistance value of the SMA member 15 made of Ni(nickel)-Ti(titanium) alloy, or made of Ni(nickel)-Ti(titanium)-Cu(copper) alloy.

An SMA member as a wire is wound in a state that a strain deformation beyond a memorized shape is exerted on the SMA member by an appropriate bias force, accompanied by a temperature rise of the SMA member. Then, the SMA member is deformed in a contracting direction by crystal phase transformation of the SMA member, and the resistance value changes in a direction opposite to the changing direction of the ordinary metal.

More specifically, in a temperature rising process, as the temperature rises, the resistance value changes in the increasing direction substantially in the same manner as the ordinary metal in a temperature region where the temperature is sufficiently lower than a transformation temperature range. However, once the temperature exceeds As point at which the crystal phase transforms from martensite phase (low temperature phase) to austenite phase (high temperature phase), the SMA wire contracts to the memorized shape, and the resistance value sharply changes in the decreasing direction. Further, once the temperature exceeds Af point at which the transformation to austenite phase (high temperature phase) ends, the resistance value changes in the increasing direction substantially in the same manner as the ordinary metal.

In the opposite process, namely, in a temperature lowering process, as the temperature lowers, the resistance value decreases in a temperature region where the temperature is sufficiently higher than the transformation temperature range. Once the temperature exceeds Ms point at which the crystal phase starts to transform from austenite phase (high temperature phase) to martensite phase (low temperature phase), the SMA wire expands by a bias force, and the resistance value sharply increases. Further, once the temperature exceeds Mf point at which the transformation to martensite phase (low temperature phase) ends, the resistance value decreases again.

As shown in FIG. 5, a characteristic curve in the temperature rising process and in the temperature lowering process has a hysteresis depending on the composition of the SMA materials.

FIG. 6 is a characteristic diagram showing a relationship between a temperature and a resistance value of the SMA member 15 in the embodiment. The lens 2 is maximally projected to the macro end, and a region beyond the macro end is not used. Accordingly, the curve shown in FIG. 6 indicates a behavior of the SMA member 15 up to the macro end. The macro end may coincide with Af point or may not coincide with Af point.

In this example, let us assume that Rstart represents a resistance value when supply of electric power and heating of the SMA member 15 is started, Rmax represents a maximum resistance value, Rinf represents a resistance value when the lens starts to move from the infinity, and Rmcr represents a resistance value when the lens is located at the macro end.

The SMA member 15 starts contracting at the point corresponding to Rmax. However, in this state, the lens has not started moving yet. The SMA member 15 is wound in a state that an appropriate tension force is applied so that the lens actually starts moving, as a stress to be applied to the SMA member 15 by contraction increases, and when the stress exceeds a stress to be applied from the bias spring 10. In view of the above, Rinf is set to such a point that the temperature corresponding to Rinf is higher than the temperature corresponding to Rmax.

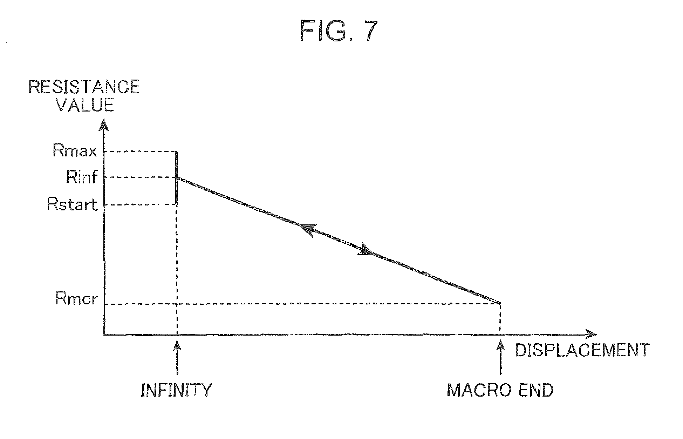

FIG. 7 is a characteristic diagram showing a relationship between lens displacement and a resistance value in the embodiment. Referring to FIG. 7, in a temperature rising process, in a temperature region where the resistance value changes in the order from Rstart to Rmax and to Rinf, the lens is immovable at the infinity; and in a temperature region where the resistance value changes from Rinf to Rmcr, the lens displacement increases toward the macro end. Conversely, in the temperature lowering process, in a temperature region where the resistance value changes from Rmcr to Rinf, the lens displacement decreases, and in a temperature region where the resistance value changes in the order from Rinf to Rmax and to Rstart, the lens is immovable at the infinity.

In the characteristic curve as described above, the hysteresis disappears in the temperature rising process and in the temperature lowering process. However, it is known that the hysteresis can be minimized by applying an appropriate treatment with use of an alloy material such as Ni(nickel)-Ti(titanium)-Cu(copper) alloy. Thus, it is possible to enhance the control performance in moving the lens, using a resistance value as a parameter.

An exemplified composition of the SMA member 15 is a ternary alloy composed of Ni(nickel)-Ti(titanium)-Cu(copper), wherein the content of Cu is 3 atm% or more. This is because of the following reason. Whereas the temperature hysteresis is about 20 °C in a binary alloy i.e. Ni-Ti alloy, the temperature hysteresis is about 10 °C in a ternary alloy i.e. the aforementioned Ni-Ti-Cu alloy. Thus, it is possible to suppress the temperature hysteresis by using the ternary alloy i.e. Ni-Ti-Cu alloy.

As shown in FIG. 7, the resistance value monotonously changes in accordance with the length of the SMA member 15 in a region between the infinity and the macro end (in a region where the resistance value changes from Rinf to Rmin). In other words, it is possible to detect displacement of the shape memory alloy actuator 11 (position of the lens barrel 4) by detecting an electrical resistance value of the SMA member 15.

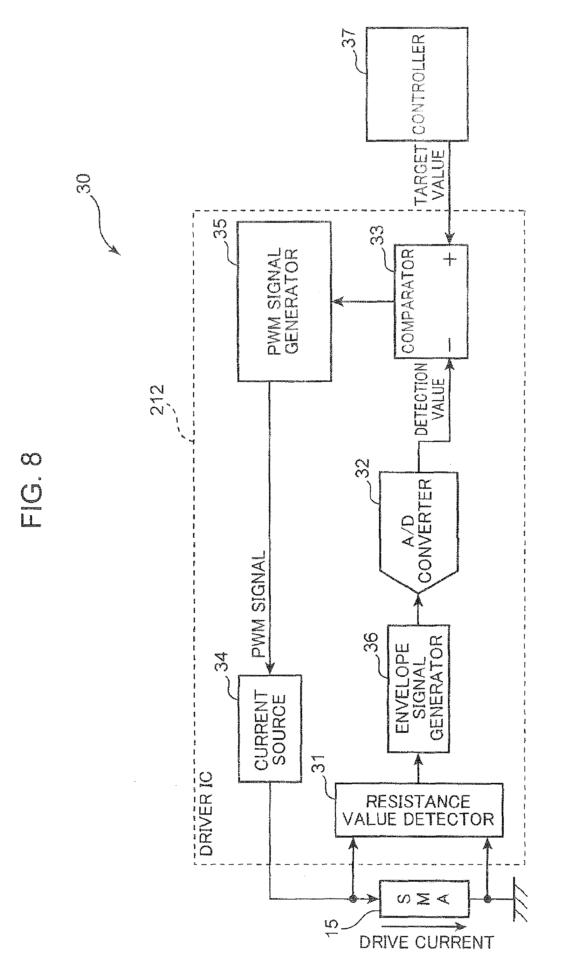

FIG. 8 is a block diagram showing an electrical configuration of a drive device 30 for the shape memory alloy actuator 11 in the first embodiment. The portion enclosed by the dotted line in FIG. 8 is a circuit portion to be integrated in the driver IC 212.

Referring to FIG. 8, the drive device 30 is provided with a resistance value detector 31, an A/D converter 32, a comparator 33, a current source 34, a PWM signal generator 35, an envelope signal generator 36, and a controller 37.

The current source 34 is a circuit for supplying a constant current of a predetermined value to the SMA member 15 in order to supply electric power and heat the SMA member 15. The current source 34 adjusts the pulse width of an electric pulse based on a PWM signal to be inputted from the PWM signal generator 35 for energizing the SMA member 15 by way of an electric pulse.

The resistance value detector 31 is a circuit for detecting a voltage value at each of both ends of the SMA member 15 so as to detect a resistance value of the SMA member 15. The detected resistance value of the SMA member 15 is outputted from the resistance value detector 31 to the envelope signal generator 36. In this embodiment, the value of a current flowing through the SMA member I is set to a constant value.

The envelope signal generator 36 is a circuit for detecting an output from the resistance value detector 31 as an envelope signal. The generated envelope signal is outputted to the A/D converter 32.

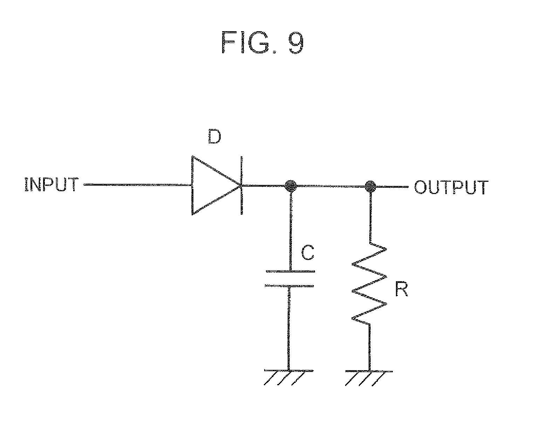

FIG. 9 shows a circuit example of the envelope signal generator 36. Referring to FIG. 9, a diode D and a capacitor C are connected in series at a cathode terminal side of the diode D. A resistor R is a circuit to be connected in parallel to the capacitor C. The envelope signal generator 36 is implementable by such a simplified circuit, and is easily integratable to the driver IC 212.

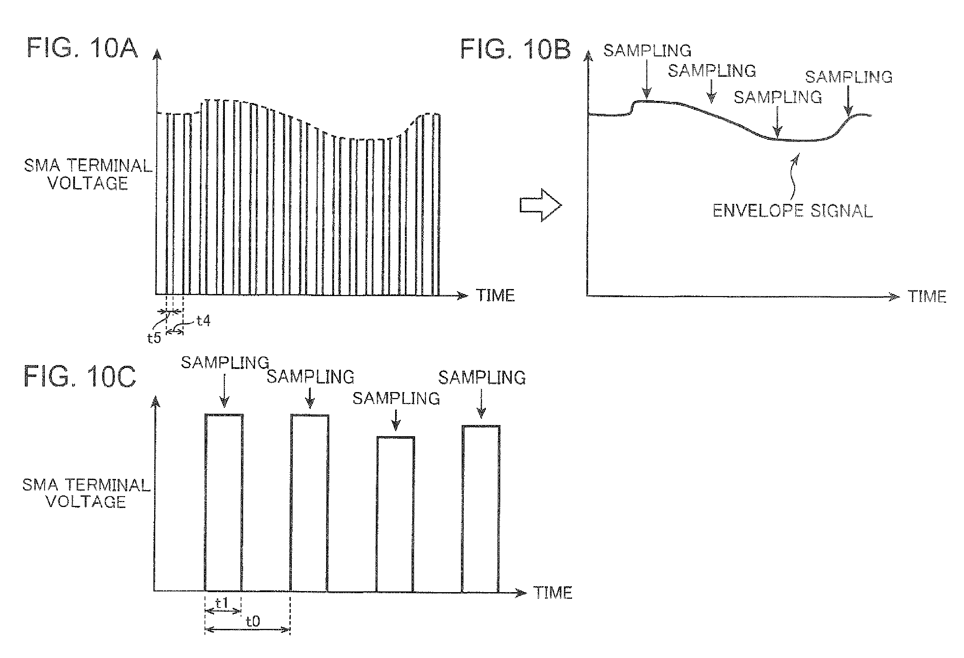

FIGS. 10A and 10B show an example of an envelope signal to be outputted from the envelope signal generator 36. For instance, in the case where the current source 34 supplies, to the SMA member 15, a PWM current having a PWM cycle t4 and a pulse width t5, as shown in FIG. 10B, the envelope signal generator 36 generates an envelope signal from a peak (crest value) of a pulse waveform obtained by application of a PWM current to the SMA member 15, as shown in FIG. 10A.

The A/D converter 32 is a circuit for obtaining a resistance value from an envelope signal to be inputted from the envelope signal generator 36 and converting the obtained resistance value into a digital value corresponding to the obtained resistance value. The thus-converted digital value is outputted to the comparator 33 as a detection value.

The A/D converter 32 obtains a detection value at a timing when the drive device 30 requires a resistance value of the SMA member 15. For instance, the timing is a timing when a sampling trigger signal is inputted from the controller 37, or a timing when the A/D converter 32 performs a sampling operation in accordance with an interval clock. As shown in FIG. 10B, the envelope signal is a sequential signal. Accordingly, the A/D converter 32 is operable to obtain a resistance value at any time. Further, the sampling timing may be any timing (see the arrows indicating sampling as shown in FIG. 10B).

The comparator 33 is a circuit for comparing a target value to be inputted from the controller 37 with a detection value to be inputted from the A/D converter 32. A comparison result is outputted to the PWM signal generator 35.

The controller 37 outputs, to the comparator 33, a value corresponding to a resistant value of the SMA member 15 to be obtained when the lens barrel 4 has moved to a target position, as a target value.

The PWM signal generator 35 is a circuit for generating a PWM signal indicating a result inputted from the comparator 33. The generated PWM signal is outputted to the current source 34.

Specifically, feedback control (servo control) is executed by the PWM signal generator 35 in such a manner that a target value to be outputted from the controller 37 coincides with a detection value to be outputted from the A/D converter 32. By controlling the resistance value of the SMA member 15, displacement of the SMA member 15 (length of the SMA member 15) is controlled, whereby the position of the shape memory alloy actuator 11 (lens 2) is controlled.

In this example, the PWM signal generator 35 generates a PWM signal that makes it possible to minimize the pulse width of a drive current to be outputted from the current source 34 and that makes it possible to set the frequency of a frequency component to be included in the drive current higher than the image readout frequency from the image sensor IC 211.

In recent years, in the field of mobile phones, multiple functions and miniaturization are required, and the installation space restriction regarding components or parts is increasing. As a result, as shown in FIG. 2, there is a case that the image sensor IC 211 and he driver IC 212 should be disposed in proximity to each other. In such a case, electrical noise resulting from a drive current flowing through the driver IC; 212 may affect an analog portion of the image sensor IC 211.

The pixel number differs among image sensor ICs 211, and an image to be picked up by these image sensor ICs has scanning lines in the range of from several hundreds to several thousands. Accordingly, in the case where the frame rate is e.g. thirty frames/see, the image readout rate from the image sensor IC 211 is in the range of form about 10 kHz to several hundreds kHz per scanning line.

In this example, assuming that the driver IC 212 generates electrical noise in the aforementioned frequency range, a scanning line on the image read out from the image sensor IC 211 may be affected by such noise. In view of the above, it is desirable that the drive current flowing through the driver IC 212 does not include a frequency component in the aforementioned frequency range to avoid influence of noise on the image.

Generally, the driver IC 212 for driving an actuator is likely to be a source of electrical noise, in view of a point that it is necessary to supply a drive current of a relatively large value in order to supply sufficient energy capable of driving a mechanical mechanism such as the arm portion 12 serving as a movable portion of the shape memory alloy actuator 11, and the lever 13.

In the case where a simple DC (Direct Current) driving system is employed as a driving system, it is possible to sufficiently lower the frequency component included in the drive current. Accordingly, it is less likely that noise may be generated in an image.

However, it is frequently the case that a drive current flowing through the actuator incorporated with the SMA member 15, as described in the embodiment, is generated by a pulse driving system such as a PWM (Pulse Width Modulation) system. Since a drive current to be generated by a PWM system is a rectangular wave, the drive current fundamentally includes a high frequency component. As a result, there is a case that such a high frequency component included in the drive current may become noise to an image to be read out from the image sensor IC 211.

In view of the above, it is necessary to avoid generation of a high frequency component which may become noise by setting a frequency component of a drive current (a frequency component included in an electric pulse) higher than the frequency used in the image sensor IC 211 (by shortening the pulse width) in order to suppress noise which may affect an image.

Specifically, the frequency of a frequency component included in a drive current to be supplied from the current source 34 to the SMA member 15 is set higher (pulse width is set shorter) to such a level that the frequency component included in the drive current does not affect an image as noise. More specifically, taking into consideration of visual features of humans, empirically, it is sufficient to raise the frequency of the frequency component included in the drive current to a frequency higher than the frequency used in the image sensor IC 211 by one digit, i.e., to set the frequency of the frequency component included in the drive current to a frequency of ten times or more as large as the frequency used in the image sensor IC 211.

For instance, in the case where an image sensor IC 211 having an image readout rate in the range of from about 10 kHz to several hundreds kHz per scanning line is used, it is desirable to set the PWM cycle of the drive current to about one-tenth (10 µsec) or shorter of the readout cycle from the image sensor IC 211.

Further, in the case where the pulse cycle is set to 100 µsec, the pulse width (corresponding to a period when a pulse is outputted), or an interval between pulses (corresponding to a period when a pulse is not outputted) may be set to about 1 µsec or shorter.

It is possible to configure the device in such a manner that a frequency component included in a drive current does not become noise by causing the PWM signal generator 35 to generate a PWM signal having a frequency lower than the image readout frequency from the image sensor IC 211. In this case, however, since the pulse cycle is excessively large, it may be difficult to finely perform duty control for the SMA member 15. In view of the above, it is desirable to generate a PWM signal having a frequency higher than the image readout frequency from the driver IC 212.

In the following, a reason for providing the envelope signal generator 36 is described. In the case where feedback control is performed using a resistance value of the SMA member 15, the following method may be proposed. For instance, in controlling supply of electric power to the SMA member 15, a terminal voltage of the SMA member 15 is detected for obtaining a resistance value of the SMA member 15 based on the detected terminal voltage. In response to application of a pulse having a certain current value to the SMA member 15, a terminal voltage in accordance with the resistance value corresponding to the current value is observed by Ohm's law. A resistance value is obtained by sampling a peak voltage. An average current to be applied to the SMA member 15 is changed by varying the PWM duty ratio (ratio of a pulse width to one cycle), whereby Joule heat to be applied to the SMA member 15 is controller.

In the case where the resistance value is obtained by the above method, electric power supply to the SMA member 15 is required. In the case where the drive device 30 is not provided with the envelope signal generator 36, the PWM signal generator 35 outputs a sampling trigger signal to the A/D converter 32 in synchronism with a PWM signal to be outputted to the current source 34. In response to receiving the sampling trigger signal, the A/D converter 32 obtains a resistance value from the resistance value detector 31, and outputs a detection value indicating the resistance value to the comparator 33.

FIG. 10C is a diagram for describing a manner as to how a resistance value is detected in the above case. During activation of the drive device 30, the current source 34 outputs a duty-controlled constant current at a predetermined cycle t0 e.g. at an interval of 100 µsec. The PWM signal generator 35 adjusts the amount of electric power to be supplied to the SMA member 15 by adjusting the duration of the pulse width t1, based on a comparison result to be inputted from the comparator 33 for heating or cooling the SMA member 15.

The PWM signal generator 35 outputs a sampling trigger signal to the A/D converter 32 in synchronism with a PWM signal, in other words, during electric power supply to the SMA member 15 for causing the A/D converter 32 to detect a resistance value (see the arrows indicating sampling as shown in FIG. 10C).

In view of the above, it is necessary to use an A/D converter 32 having a sampling time shorter than the duration of the pulse width. For instance, assuming that the sampling time is 5 µsec (microseconds), and the PWM duty ratio is 5% at a time when the pulse width (t1) is shortest, the PWM cycle (t0) is 100 µsec based on a simple computation, in other words, the frequency is 10 kHz. This frequency is a frequency which may involve influence of electrical noise on the image sensor IC 211 having an image readout rate in the range of from about 10 kHz to several hundreds kHz per scanning line.

As described above, in the case where the PWM signal generator 35 generates a PWM signal having a short pulse width in order to avoid influence on the image sensor IC 212 as described above, use of a high-speed A/D converter 32 may make it possible to perform a sampling operation in a shorter time.

The above configuration may be adopted. However, the above configuration is not preferable in the case where the above configuration is applied to e.g. a camera unit in a mobile phone, because a circuit corresponding to such a high-speed A/D converter 32 is large in scale, which may increase the size and the cost of the driver IC 212.

In view of the above, in the drive device 30 of the embodiment, the envelope signal generator 36 is provided anterior to the A/D converter 32. This configuration is advantageous in performing feedback control utilizing a resistance value, without using a high-speed A/D converter 32.

As shown in FIG. 10A, a current source 36 outputs a duty-controlled drive current at a predetermined cycle t4 and with a pulse width (t5).

In the above case, assuming that the PWM cycle (t4) is 10 µsec, and the PWM duty ratio is 5% at a time when the pulse width (t5) is shortest, the sampling time should be 0.5 µsec or shorter based on a simple computation. In other words, an A/D converter 32 having a sampling time of 0.5 µsec or shorter is necessary.

In the embodiment, providing the envelope signal generator 36 is advantageous in sampling an envelope signal and in detecting a resistance value, regardless of using the A/D converter 32 in which the sampling time is not so fast.

Specifically, since an envelope signal is a time sequential signal, any sampling time may be applied, and it is possible to detect a resistance value, regardless of a pulse width of a drive current to be applied. Further, it is not necessary to synchronize the sampling timing with a PWM signal, and it is possible to perform a sampling operation any time.

Thus, the above configuration enables to set the PWM frequency to a significantly high value. For instance, by setting the PWM frequency to several hundreds kHz or higher, it is possible to avoid adverse influence of electrical noise on the image sensor IC 211 as described above. Further, it is possible to perform feedback control using an electrical resistance value of the SMA member 15.

### (Second Embodiment)

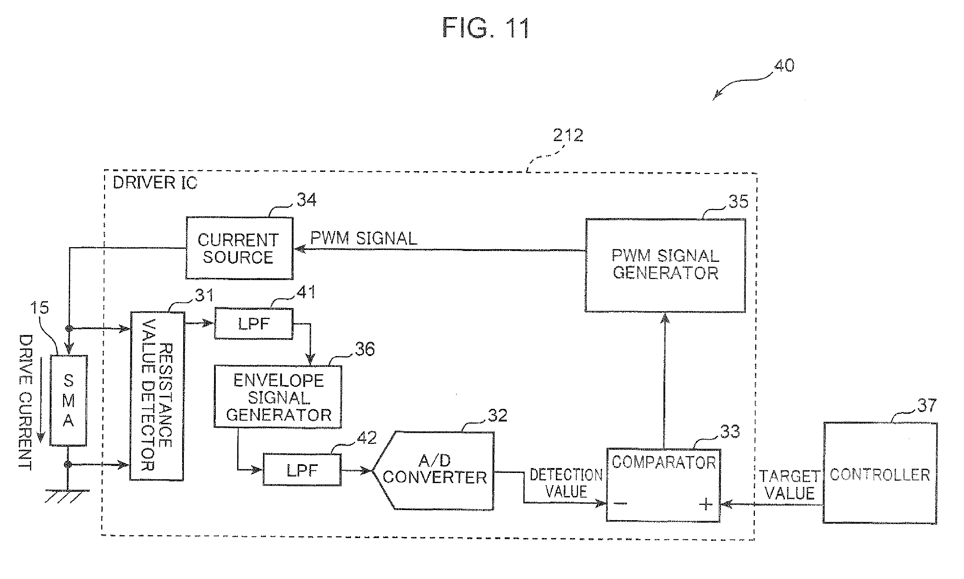

FIG. 11 is a block diagram showing an electrical configuration of a drive device 40 for a shape memory alloy actuator 11 in the second embodiment. Referring to FIG. 11, unlike the drive device 30 in the first embodiment, the drive device 40 has an LPF (Low Pass Filter) 41 and an LPF 42 at positions anterior and posterior to the envelope signal generator 36 (on the input side and on the output side of the envelope signal generator 36). With the provision of the LPF 41 and the LPF 42, the drive device 40 is operable to restrict the frequency band of a signal processing frequency.

The LPF 41 is operable to suppress intrusion of high frequency noise such as ringing of a drive pulse or spike noise into the envelope signal generator 36. The LPF 42 is operable to absorb sharp change of an envelope signal waveform to be outputted from the envelope signal generator 36. Thus, it is possible to stabilize detection by the A/D converter 32.

Combining the appropriate frequency band restriction filters as described above is advantageous in obtaining an envelope signal of enhanced reliability and in accurately performing feedback control.

In the second embodiment, the resistance value of the SMA member 15 is digitally processed by the A/D converter 32 in the driver IC 212. It is possible to configure the driver IC 212 with use of an analog circuit, in place of a digital circuit.

Further, an envelope signal is obtained by detecting a peak of a terminal voltage of the SMA member 15 on the basis of a ground (GND) voltage (referring to FIG10A). Alternatively, it is possible to use a method for detecting a peak voltage or a bottom voltage on the basis of a reference voltage, or to use a method for detecting both end voltages of the SMA member 15 as a peak voltage and a bottom voltage.

Further, a PWM system is employed as the driving system. Alternatively, it is possible to employ a PFM (Pulse Frequency Modulation) system, or a system in which a detection pulse is interpolated into a drive waveform of another driving system.

In the foregoing embodiments, the shape memory alloy actuator 11 is used for moving the lens barrel 4. Alternatively, the shape memory alloy actuator 11 may be used for moving the other component such as the image sensor IC 211.

The specification discloses the aforementioned features. The following is a summary of the primary features of the embodiments.

A drive device according to an aspect is a drive device which is disposed near an imaging element for reading out an image at a predetermined cycle, and is configured to cause a driven member coupled to a shape memory alloy member to perform an intended displacement by expansion/contraction of the shape memory alloy member by supply electric power for and heating of the shape memory alloy member. The drive device includes a drive circuit which is operative to supply electric power to the shape memory alloy member; and a controller which controls the drive circuit so that an electric pulse having a pulse cycle shorter than the predetermined cycle is supplied to the shape memory alloy member.

Further, in the drive device, preferably, the electric pulse to be supplied by the drive circuit may have a pulse cycle shorter than one-tenth of the predetermined cycle.

Further, a drive device according to another aspect is a drive device which is disposed near an imaging element for reading out an image at a predetermined cycle, and which is configured to cause a driven member coupled to a shape memory alloy member to perform an intended displacement by expansion/contraction of the shape memory alloy member by supply electric power for and heating of the shape memory alloy member. The drive device includes a drive circuit which is operative to supply electric power to the shape memory alloy member; and a controller which supplies, to the drive circuit, electric power such that a peak portion or a bottom portion of a voltage waveform to be applied to the shape memory alloy member has a pulse waveform with a time duration of one microsecond or shorter.

In the drive device having one of these configurations, the pulse cycle of the drive current to be supplied to the SMA member is shorter than the cycle to be used by the imaging element, which is one of the peripheral circuits. Accordingly, the above configuration is advantageous in suppressing generation of noise to the imaging element resulting from a frequency component included in the drive current.

In the specification, the term "near" or "in proximity to" should be construed in light of the object of the invention. The region "near" or "in proximity to'' the imaging element indicates a region, in which the drive circuit may generate noise to the imaging element.

Further, one of the aforementioned drive devices may preferably further include a resistance value detector which detects a resistance value of the shape memory alloy member, wherein the controller supplies, to the drive circuit, an amount of electric power in accordance with the resistance value detected by the resistance value detector.

The drive device having the above configuration is advantageous in performing feedback control by a resistance value.

Further, the drive device may further include an envelop signal generator which generates an envelope signal based on a terminal voltage of the shape memory alloy member, wherein the resistance value detector detects the resistance value from the envelope signal.

In the drive device having the above configuration, the resistance value is obtained from the envelope signal. Accordingly, it is possible to detect the resistance value without depending on a pulse width.

Further, in the drive device, preferably, the envelope signal generator may generate the envelope signal based on a signal relating to electric power having a specific frequency or lower.

The drive device having the above configuration is advantageous in preventing intrusion of high frequency noise such as ringing of a drive pulse or spike noise, and in stabilizing detection of the resistance value.

Further, in the drive device, preferably, the resistance value detector may detect the resistance value from the envelope signal having a specific frequency or lower.

The drive device having the above configuration is advantageous in absorbing sharp change of an envelop signal waveform, and in stabilizing detection of the resistance value.

Further, in the drive device, preferably, the controller may be operable to change at least one of a pulse cycle, a pulse width, and a pulse crest value of the electric pulse for changing an amount of electric power to be supplied to the shape memory alloy member.

The drive device having the above configuration is advantageous in finely controlling the electric power to be supplied to the SMA member.

This application is based on Japanese Patent Application No. 2010-215445 filed on September 27, 2010, the contents of which are hereby incorporated by reference.

Although the present disclosure has been fully described by way of example with reference to the accompanying drawings, it is to be understood that various changes and modifications will be apparent to those skilled in the art. Therefore, unless otherwise such changes and modifications depart from the scope of the present disclosure hereinafter defined, they should be construed as being included therein.

### INDUSTRIAL APPLICABILITY

The invention provides a drive device incorporated with a shape memory alloy member.

## Claims

1. A drive device disposed near an imaging element for reading out an image at a predetermined cycle, and configured to cause a driven member coupled to a shape memory alloy member to perform an intended displacement by expansion/contraction of the shape memory alloy member by supply electric power for heating of the shape memory alloy member, the drive device comprising:
a drive circuit which is operative to supply electric power to the shape memory alloy member; and
a controller which controls the drive circuit so that an electric pulse having a pulse cycle shorter than the predetermined cycle is supplied to the shape memory alloy member.

2. The drive device according to claim 1, wherein
the electric pulse to be supplied by the drive circuit has a pulse cycle shorter than one-tenth of the predetermined cycle.

3. A drive device disposed near an imaging element for reading out an image at a predetermined cycle, and configured to cause a driven member coupled to a shape memory alloy member to perform an intended displacement by expansion/contraction of the shape memory alloy member by supply electric power for heating of the shape memory alloy member, the drive device comprising:
a drive circuit which is operative to supply electric power to the shape memory alloy member; and
a controller which supplies, to the drive circuit, electric power such that a peak portion or a bottom portion of a voltage waveform to be applied to the shape memory alloy member has a pulse waveform with a time duration of one microsecond or shorter.

4. The drive device according to claim 1, further comprising:
a resistance value detector which detects a resistance value of the shape memory alloy member, wherein
the controller supplies, to the drive circuit, an amount of electric power in accordance with the resistance value detected by the resistance value detector.

5. The drive device according to claim 4, further comprising:
an envelop signal generator which generates an envelope signal based on a terminal voltage of the shape memory alloy member, wherein
the resistance value detector detects the resistance value from the envelope signal.

6. The drive device according to claim 5, wherein
the envelope signal generator generates the envelope signal based on a signal relating to electric power having a specific frequency or lower.

7. The drive device according to claim 5, wherein
the resistance value detector detects the resistance value from the envelope signal having a specific frequency or lower.

8. The drive device according to claim 1, wherein
the controller is operable to change at least one of a pulse cycle, a pulse width, and a pulse crest value of the electric pulse for changing an amount of electric power to be supplied to the shape memory alloy member.
